# EUROPÄISCHE PATENTSCHRIFT

(11) **EP 0 488 017 B1**
(45) Veröffentlichungstag und Bekanntmachung des Hinweises auf die Patenterteilung: **10.05.1995**
(21) Anmeldenummer: 91119685.5
(22) Anmeldetag: 19.11.1991
(51) Int. Cl.: B23B 51/10

(54) **Entgratwerkzeug**
Deburring tool
Outil à ébavurer

(30) Priorität: 27.11.1990 DE 4037649
(43) Veröffentlichungstag der Anmeldung: 03.06.1992
(73) Patentinhaber: Heule, Heinrich, CH-9434 Au (CH)
(72) Erfinder: Heule, Heinrich, CH-9434 Au (CH)
(74) Vertreter: Riebling, Peter, Dr.-Ing.

(56) Entgegenhaltungen:
- EP-A- 0 129 116
- DE-B- 2 649 208
- GB-A- 1 395 639

## Beschreibung

Die Erfindung betrifft ein Entgratwerkzeug nach den Oberbegriff des Anspruchs 1.

Ein derartiges Entgratwerkzeug beschreibt die Deutsche Auslegeschrift 26 49 208. Das Gehäuse und der Zwischenkörper sind dort verhältnismässig kurz ausgebildet und haben einen über die Länge gleichbleibenden Durchmesser, so daß Bohrungen unterhalb eines vorbestimmten Durchmessers mit diesem bekannten Werkzeug nicht entgratet werden können. Der Zwischenkörper ist höhenverstellbar im Gehäuse gehalten. Außerdem wird der Drehwinkel über eine von außen einstellbare Schraube begrenzt, die an einem Mittelstück des Zwischenkörpers angreift.

Gegenüber diesem Stand der Technik liegt der Erfindung insbesondere die Aufgabe zugrunde, das bekannte Entgratwerkzeug so auszugestalten, daß auch Bohrungen mit einem fühlbar verringerten Durchmesser wirksam entgratet werden können. Außerdem soll sich das Entgratwerkzeug durch eine verbesserte Bedienbarkeit und eine verlängerte Lebensdauer auszeichnen.

Zur Lösung dieser Aufgabe weist die Erfindung die Merkmale des Anspruchs 1 auf.

Durch diese Merkmale wird das Entgratwerkzeug nach unten zur Messerseite hin fühlbar verlängert und erhält dort einen fühlbar verringerten Durchmesser, wodurch die Erfindungsaufgabe gelöst wird. Den Messern benachbart ist der Führungsschaft des Zwischenkörpers vorgesehen, der zur Lagerung des Führungskörpers im Gehäuse dient.

Es erweist sich als vorteilhaft, wenn der Zwischenkörper im Gehäuse höhenverstellbar ist, weil dann die Messer leicht ausgetauscht werden können, beispielsweise zum Entgraten von Bohrungen mit anderen Durchmessern. Um dies zu erreichen, wird es bevorzugt, wenn ein von außen betätigbarer Exzenter an einem Bunde des Zwischenkörpers anliegt.

Für eine Drehwinkelbegrenzung des Zwischenkörpers wird es bevorzugt, wenn der Zwischenkörper wenigstens einen Bolzen aufweist, an den sich eine im Gehäuse verstellbare Schraube anlegt.

Eine wichtige Ausgestaltung einer Weiterbildung der Erfindung ist dadurch gekennzeichnet, daß das Gehäuse an einem Schaft leicht auswechselbar befestigt ist, wozu eine von außen betätigbare Klemmschraube in eine Freistellung des Zwischenkörpers eingreift. Dadurch kann man auf konstruktiv einfache Weise den Zwischenkörper mitsamt seinem Gehäuse durch eine andere Baueinheit mit Zwischenkörper und Gehäuse austauschen, die beispielsweise eine andere Länge haben und/oder einen anderen Durchmesser.

An seiner gegenüberliegenden Seite ist der Zwischenkörper im Grundkörper im Bereich einer Abschlußplatte drehbar gelagert, welche Abschlußplatte sich an der Innenseite einer zentralen Ausnehmung im Grundkörper anlegt.

Weiteres Merkmal einer Weiterbildung der vorliegenden Erfindung ist, daß die Verdrehung des Zwischenkörpers genau reproduzierbar über eine Druckpunktschraube einstellbar ist, welche Druckpunktschraube in einer radialen Bohrung im Grundkörper angeordnet ist und sich mit ihrem bolzenseitigen Ende an einem Anschlag der Wippe abstützt.

Je nachdem, wie man die Druckpunktschraube hinein oder herausdreht, wird die Verdrehung des Zwischenkörpers bestimmt und damit der gewünschte Senkdurchmesser der Messer oder Fasengröße der Messer genau eingestellt. Mit der Einstellung der Druckpunktschraube wird also genau reproduzierbar der Senkdurchmesser eingestellt, wobei dann die Messer in ihrer Entgrataktion mit dem eingestellten Senkdurchmesser in die Bohrung hineinfahren und dann beim Durchfahren durch die Bohrung federbelastet in die Führungsausnehmung des Messergehäuses hineingedrückt werden. Sobald das Senkwerkzeug durch die Bohrung hindurch getreten ist, treten die Messer unter der Federbelastung wieder aus der Bohrung heraus und entgraten mit ihrer Rückseite den rückseitigen Bohrungsrand, wobei wiederum die Druckpunktschraube den gewünschten Senkdurchmesser genau reproduzierbar definiert.

Ein weiteres wichtiges Merkmal einer Weiterbildung der vorliegenden Erfindung ist, daß der Zwischenkörper höhenverstellbar in der zentralen Längsbohrung im Grundkörper und im Messergehäuse des Senkwerkzeuges gelagert ist. Diese Höhenverstellung hat den Zweck, eine leichte Auswechselbarkeit der Entgratmesser zu gewährleisten. Wie bereits schon bekannt, weist der Zwischenkörper zwei parallel zueinander stehende Bolzen auf, wobei jeder Bolzen einem Entgratmesser zugeordnet ist und die radiale Verschiebung dieses Entgratmessers in der Führungsausnehmung im Messergehäuse steuert. Damit nun die Messer leicht auswechselbar sind, ist vorgesehen, daß die gesamte Wippe höhenverstellbar ausgebildet ist, so daß mit der Höhenverstellung des Zwischenkörpers die in die Entgratmesser eingreifenden Bolzen außer Eingriff gebracht werden können und die Entgratmesser dadurch leicht aus ihrer Führungsausnehmung im Messergehäuse herausgezogen werden können.

In einer bevorzugten Ausführungsform erfolgt die Höhenverstellung des Zwischenkörpers über eine Exzenterverstellung.

Hierbei ist vorgesehen, daß ein drehbar gelagerter Exzenter sich mit einer Nase an einem Bund des Zwischenkörpers abstützt und die Verdrehung des Exzenters über eine Fixierschraube eingestellt wird.

In der einen Verdrehlage des Exzenters befinden sich also die unteren, stirnseitigen Bolzen des Zwischenkörpers in Eingriff mit den Entgratmessern und in der anderen Drehlage des Exzenters gelangen diese Bolzen (wegen der Höhenverstellung des Zwischenkörpers) außer Eingriff mit den zugeordneten Ausnehmungen in den Messern und die Messer können so leicht ausgewechselt werden.

In an sich bekannter Weise wird die Verdrehung des Zwischenkörpers über eine Torsionsfeder gesteuert, so daß die Messer federbelastet unter der Wirkung dieser Torsionsfeder beim Eintritt in eine Durchgangsbohrung in die Führungsausnehmung im Messergehäuse eingefahren werden.

Die Verwendung dieser Torsionsfeder für die vorher besagte Höhenverstellung hat den Vorteil, daß diese Torsionsfeder auch gleichzeitig federbelastet den Zwischenkörper in Richtung auf die Entgratmesser vorspannt. Das heißt, die Bolzen am Zwischenkörper, die in die Entgratmesser eingreifen, werden unter der Last der Feder in diese Entgratmesser eingedrückt. Das heißt, der Exzenter wird immer durch den Druck der Torsionsfeder in seiner Stellung gehalten, die der abgesenkten Stellung des Zwischenkörpers (Arbeitsstellung) entspricht und nur durch Verwendung eines Werkzeuges, welches am Exzenter ansetzt, kann somit der Exzenter entgegen dieser Federkraft verstellt werden.

Die Erfindung wird nun anhand von einem Ausführungsbeispiel näher erläutert. Hierbei ergeben sich aus dem Ausführungsbeispiel und seiner Beschreibung weitere Merkmale und Vorteile.

Es zeigen:
- Figur 1:: schematisiert ein Senkwerkzeug gemäß dem Ausführungsbeispiel der Erfindung;
- Figur 2:: den Schnitt durch das Senkwerkzeug in Höhe der Linie A-A;
- Figur 3:: den Schnitt durch das Senkwerkzeug in Höhe der Linie B-B;
- Figur 4:: in der Seitenansicht einen hierbei verwendeten Zwischenkörper
Das Senkwerkzeug gemäß dem Ausführungsbeispiel der Erfindung besteht im wesentlichen aus einem zylindrischen Grundkörper 2, welcher eine zentrale Ausnehmung 25 aufweist. In diese zentrale Ausnehmung 25 greift ein Ansatz eines Schaftes 1 ein, welcher Schaft mit einer Klemmschraube 8 drehfest mit dem Grundkörper verbunden ist.

Der Schaft 1 dient zur Befestigung des Entgrat- oder Senkwerkzeuges in einer Maschine.

Es ist also ein wesentlicher Vorteil, daß der Schaft leicht auswechselbar über eine Klemmschraube 8 im Grundkörper 2 gehalten wird. Damit besteht nämlich der Vorteil, daß unterschiedlichste Schäfte mit dem Grundkörper leicht lösbar verbindbar sind. Beispielsweise können Schäfte in der Ausführung Weldon verwendet werden oder auch Stellhülsen oder entsprechende Schäfte mit Auffahrsicherung und dergleichen mehr.

Der Grundkörper 2 ist nach unten in Richtung auf Entgratmesser 12 durch ein Messergehäuse 3 verlängert, welches einen gegenüber dem Grundkörper verminderten Durchmesser hat. Damit ist es möglich, auch kleinste Entgratdurchmesser zu entgraten, wie z. B., minimale Entgratdurchmesser von z. B. 4 mm oder kleiner.

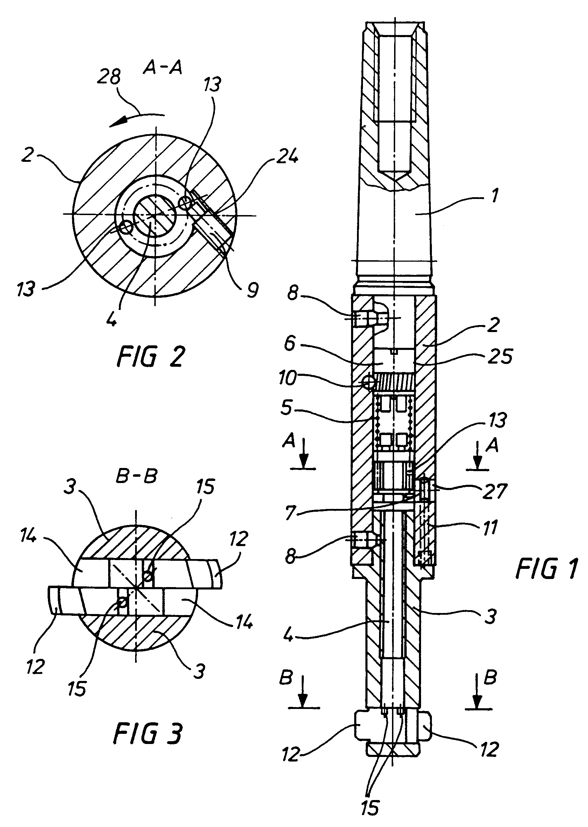

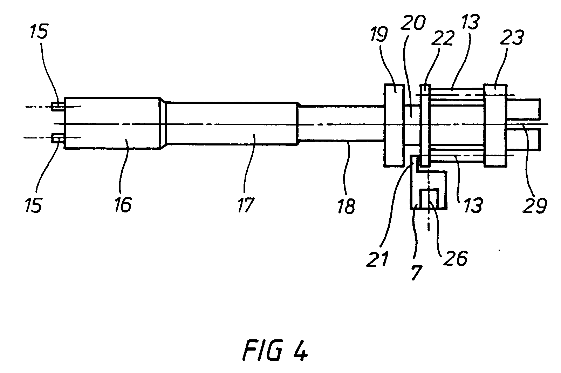

Im Innenraum des Grundkörpers 2 und im Messergehäuse ist drehbar ein Zwischenkörper 4 gelagert, der gleichzeitig höhenverstellbar angeordnet ist. Die Einzelheiten des Zwischenkörpers ergeben sich aus Figur 4. Er besteht im wesentlichen aus stirnseitig angebrachten Bolzen 15, die gemäss Figur 3 in die zugeordneten Entgratmesser eingreifen und somit die Verschiebung der Entgratmesser 12 im Bereich von Führungsausnehmungen 14 steuern.

Wichtig ist nun, daß die Messer 12 an der Stirnseite eines Führungsschaftes 16 angeordnet sind, welcher Führungsschaft als Drehlager für den Zwischenkörper im Messergehäuse 3 dient. Der Führungsschaft 16 dient also der Drehlagerung des verlängerten Zwischenkörpers 4 im Messergehäuse 3, womit der Vorteil verbunden ist, daß eine optimale Abstützung des Zwischenkörpers 4 über den Führungsschaft 16 im Bereich des Messergehäuses 3 gewährleistet ist und diese Abstützung sich so nahe wie möglich an den Entgratmessern 12 befindet.

Dadurch wird das gesamte Werkzeug stabil und die Messer werden praktisch spielfrei in ihrer Führungsausnehmung 14 gelagert.

Aufwärts des Führungsschaftes 16 ist ein Schaft 17 verminderten Durchmessers vorgesehen, der gegenüber der Innenbohrung im Messergehäuse 3 freigestellt ist, um zu gewährleisten, daß die Lagerung des Führungskörpers 4 nur im Bereich des Führungsschaftes 16 stattfindet.

An den Schaft 17 schließt sich eine Freistellung 18 an, in deren Bereich gegenüberliegend im Grundkörper 2 die Klemmschraube 8 eingesetzt ist. Diese Klemmschraube 8 hat die Aufgabe, das Messergehäuse 3 lösbar aber drehfest im Grundkörper 2 zu spannen. Damit besteht der wesentliche Vorteil, daß das Messergehäuse 3 leicht auswechselbar im Grundkörper 2 befestigt ist und daß demzufolge auch der Zwischenkörper 4 leicht auswechselbar im Grundkörper 2 angeordnet ist.

Damit besteht der wesentliche Vorteil, daß auch sehr lange Durchgangsbohrungen leicht entgratet werden können, denn es werden dann einfach das Messergehäuse 3 und der dazugehörende Zwischenkörper gegen entsprechend längere Teile ausgewechselt und somit ergibt sich ein modularer Aufbau des Senkwerkzeuges, das universell für unterschiedlich lange Durchgangsbohrungen einsetzbar ist.

Die Freistellung 18 dient also dazu, um sicherzustellen, daß die Klemmschraube 8 in diesem Bereich nicht mit dem Zwischenkörper 4 kollidiert.

Jenseits der Freistellung 18 ist eine Abschlußplatte 19 angeordnet, die als Drehlagerung des Zwischenkörpers in der zentralen Ausnehmung 25 im Grundkörper 2 dient. Aufgrund dieser Lagerstelle ist gleichzeitig eine Abdichtung der zentralen Ausnehmung im Messergehäuse gegenüber der Mechanik des Zwischenkörpers gewährleistet. Die Mechanik des Zwischenkörpers ist hierbei oberhalb der Abschlußplatte 19 angeordnet, und die Abschlußplatte 19 dient der Lagerung.

An die Abschlußplatte 19 schließt sich eine Eindrehung 20 an, die für den Eingriff eines Exzenters 7 bestimmt ist, der der Höhenverstellung des Zwischenkörpers 4 dient. Der Exzenter 7 ist in Figur 4 angedeutet und ebenso aus Figur 1 zu entnehmen.

Wird der Exzenter mittels eines Werkzeuges, welches in seine Ausnehmung 26 eingeführt wird, um 180° gedreht wird, dann legt sich die Nase 21 an die Unterseite des Bundes 22 an und hebt somit den gesamten Zwischenkörper nach oben, wodurch die Bolzen 15 außer Eingriff mit den zugeordneten Ausnehmungen der Entgratmesser 12 gelangen. Die Entgratmesser können dadurch leicht radial auswärts aus ihren Führungsausnehmungen 14 entnommen und durch andere Entgratmesser ersetzt werden.

Auch ist eine Fixierschraube 11 vorgesehen, welche verhindert, daß der Exzenter 7 radial auswärts aus der Querbohrung 27 herausfällt.

An den Bund 22 schließen sich zwei einen gegenseitigen Abstand voneinander einnehmende Bolzen 13 an, die Verdrehanschläge für den Verdrehantrieb des Zwischenkörpers 4 darstellen.

Gemäß Figur 2 dient zur Einstellung der Verdrehung des Zwischenkörpers 4 eine Druckpunktschraube 9, die in einer radialen Bohrung 24 im Grundkörper 2 eingeschraubt ist. Das bolzenseitige Ende dieser Druckpunktschraube 9 stützt sich an dem einen Bolzen 13 ab. Mit dieser Einstellung wird somit die radial auswärts gehende Verschiebung der Messer genau reproduzierbar eingestellt. Sobald die Messer durch eine Durchgangsbohrung fahren, verdreht sich der Zwischenkörper in Pfeilrichtung 28 entgegen der Kraft einer Torsionsfeder 5, die sich mit ihrem einen Ende in einem Schlitz 29 an dem Zwischenkörper abstützt und mit ihrem anderen Ende an einem Spannstück 6 anliegt, welches Spannstück über eine Spannschraube 10 verdrehbar ist. Die Spannschraube 10 greift hierbei mit ihrem bolzenseitigen Gewinde an einem als Ritzel ausgebildeten Außengewinde des Spannstückes 6 an. Über die Verdrehung der Spannschraube kann somit die Federkraft der Torsionsfeder stufenlos eingestellt werden.

Wie vorher bereits schon beschrieben, drückt somit auch die Torsionsfeder 5 des höhenverstellbaren Zwischenkörpers 4 mit ihrem Bolzen 15 unter der Kraft dieser Torsionsfeder in die zugeordneten Ausnehmungen der Entgratmesser 12 hinein.

Im übrigen liegt die Feder mit ihren Federbindungen auf dem Bund 23 auf.

Mit dem beschriebenen Entgratwerkzeug besteht also der wesentliche Vorteil, daß der Senkdurchmesser des Entgratmessers 12 über die Druckpunktschraube 9 genau einstellbar ist, so daß beim Entgraten eine genau reproduzierbare Fase beim Entgraten erreichbar ist. Ferner besteht der Vorteil, daß das Messer aufgrund des nach unten verlängerten Zwischenkörpers und dem nach unten verlängerten Messergehäuse auch in lange Durchgangsbohrungen eingefahren werden kann und hierbei auch kleine Durchgangsbohrungen entgratet werden können und ferner besteht der Vorteil, daß der Zwischenkörper und das Messergehäuse leicht auswechselbar sind, um auch lange Durchgangsbohrungen entgraten zu können.

Die wichtigsten Merkmale des vorbeschriebenen Ausführungsbeispiels der vorliegenden Erfindung liegen also in der Art und Ausbildung des Zwischenkörpers, der einerseits höhenverstellbar ist, andererseits nach unten verlängert ist und unten drehbar im Messergehäuse 3 über den Führungsschaft 16 gelagert ist und im übrigen noch eine exakte Einstellung über die Druckpunktschraube ermöglicht.

### ZEICHNUNGS-LEGENDE

- 1: Schaft
- 2: Grundkörper
- 3: Messergehäuse
- 4: Zwischenkörper
- 5: Torsionsfeder
- 6: Spannstück
- 7: Exzenter
- 8: Klemmschraube
- 9: Druckpunktschraube
- 10: Spannschraube
- 11: Fixierschraube
- 12: Entgratmesser
- 13: Bolzen
- 14: Führungsausnehmung
- 15: Bolzen
- 16: Führungsschaft
- 17: Schaft
- 18: Freistellung
- 19: Abschlußplatte
- 20: Eindrehung
- 21: Nase
- 22: Bund
- 23: Bund
- 24: Bohrung
- 25: Ausnehmung
- 26: Ausnehmung
- 27: Querbohrung
- 28: Pfeilrichtung
- 29: Schlitz

## Patentansprüche

1. Entgratwerkzeug mit einem länglichen Gehäuse (2,3), in dem drehbar ein Zwischenkörper (4) gelagert ist, an dessen oberem Ende eine Torsionsfeder (5) angreift und die an ihrem unteren Ende Bolzen aufweist, die in Ausnehmungen an Messern (12) eingreifen, die im wesentlichen in radialer Richtung des Werkzeugs entgegen der Federkraft in Führungen im Gehäuse des Werkzeugs geführt verschiebbar sind, **dadurch gekennzeichnet,** daß das Gehäuse aus einem Grundkörper (2) und einen am unteren Ende in eine zentrale Ausnehmung (25) des Grundkörpers festlegbaren und der Führung des Zwischenkörpers (4) dienenden Messergehäuse (3) besteht, daß der Grundkörper (2) und das Messergehäuse (3) im wesentlichen zylindrisch und langgestreckt ausgebildet sind und daß das Messergehäuse (3) zum messerseitigen Ende hin einen den jeweiligen Bohrungsdimensionen des Werkstücks entsprechenden, gegenüber dem Grundkörper (2) verringerten Durchmesser aufweist und daß der Zwischenkörper (4) an seinem unteren, messerseitigen Ende einen der Lagerung im Messergehäuse (3) dienenden Führungsschaft (16) und am oberen Ende eine an der Innenseite der zentralen Ausnehmung im Grundkörper (2) sich abstützende Abschlußplatte (19) aufweist.

2. Entgratwerkzeug nach Anspruch 1, **dadurch gekennzeichnet,** daß der Zwischenkörper (4) mittels eines von außen einstellbaren Exzenters (7) im Messergehäuse (3) höhenverstellbar ausgebildet ist, welcher gegen einen Bund (22) des Zwischenkörpers (4) anliegt.

3. Entgratwerkzeug nach Anspruch 1 und 2, **dadurch gekennzeichnet,** daß der Zwischenkörper (4) wenigstens einen Bolzen (13) aufweist, an dem sich eine im Messergehäuse (3) von außen verstellbare Druckpunktschraube (9) anlegt.

4. Entgratwerkzeug nach einem der Ansprüche 1 bis 3, **dadurch gekennzeichnet,** daß das Gehäuse (3) an einem Schaft (1,2) leicht auswechselbar befestigt ist, wozu eine von außen betätigbare Klemmschraube (8) in eine Freistellung (18) des Zwischenkörpers (4) eingreift.

## Claims

1. A deburring tool with a longitudinal housing (2,3) in which an intermediate body (4) is rotatably mounted, at the upper end of which a torsion spring (5) engages and which has at its lower end pins which engage in recesses on blades (12), which are displaceable substantially in radial direction of the tool contrary to the elastic force guided in guideways in the housing of the tool, characterised in that the housing consists of a base body (2) and a blade housing (3) which is able to be fixed at the lower end into a central recess (25) of the base body and which serves to guide the intermediate body (4), that the base body (2) and the blade housing (3) are constructed so as to be substantially cylindrical and elongated and that the blade housing (3) has towards the end on the blade side a diameter which is reduced compared with the base body (2) and which corresponds to the respective bore dimensions of the workpiece, and that the intermediate body (4) has at its lower end on the blade side a guide shaft (16) serving for support in the blade housing (3) and at the upper end has a closure plate (19) resting against the inner side of the central recess in the base body (2).

2. A deburring tool according to Claim 1, characterised in that the intermediate body (4) is constructed so as to be vertically adjustable by means of an externally adjustable eccentric (7) in the blade housing (3), which lies against a collar (22) of the intermediate body (4).

3. A deburring tool according to Claim 1 and 2, characterised in that the intermediate body (4) has at least one pin (13) against which a pressure point screw (9) lies which is adjustable from the exterior in the blade housing (3).

4. A deburring tool according to one of Claims 1 to 3, characterised in that the housing (3) is attached to a shaft (1,2) so as to be easily exchangeable, for which purpose a clamping screw (8), able to be actuated from the exterior, engages into a free position (18) of the intermediate body (4).

## Revendications

1. Outil d'ébavurage comprenant un carter oblong (2, 3) dans lequel est monté en rotation un corps intermédiaire (4) à l'extrémité supérieure duquel agit un ressort de torsion (5) et qui comporte, à son extrémité inférieure, des boulons agissant dans des creux au niveau de lames (12) qui sont mobiles sensiblement dans le sens radial de l'outil, à l'encontre de la force du ressort, dans des glissières prévues dans le carter de l'outil, caractérisé en ce que le carter se compose d'un corps de base (2) et d'un carter de lames (3) apte à être immobilisé, à son extrémité inférieure, dans un creux central (25) du corps de base et servant au guidage du corps intermédiaire (4), en ce que le corps de base (2) et le carter de lames (3) sont sensiblement cylindriques et allongés, en ce que le carter de lames (3) présente, en direction de l'extrémité située côté lames, un diamètre correspondant aux dimensions du perçage de la pièce à usiner et inférieur à celui du corps de base (2), et en ce que le corps intermédiaire (4) comporte, à son extrémité inférieure située côté lames, une tige de guidage (16) servant au montage dans le carter de lames (3) et, à l'extrémité supérieure, une plaque d'obturation (19) qui s'appuie sur le côté intérieur du creux central prévu dans le corps de base (2).

2. Outil d'ébavurage selon la revendication 1, caractérisé en ce que le corps intermédiaire (4) est conçu pour être réglable en hauteur dans le carter de lames (3), à l'aide d'un excentrique (7) réglable de l'extérieur qui est appliqué contre une collerette (22) du corps intermédiaire (4).

3. Outil d'ébavurage selon les revendications 1 et 2, caractérisé en ce que le corps intermédiaire (4) comporte au moins un boulon (13) contre lequel s'applique une vis de point de poussée (9) réglable de l'extérieur dans le carter de lames (3).

4. Outil d'ébavurage selon l'une des revendications 1 à 3, caractérisé en ce que le carter (3) est fixé à une tige (1, 2) de manière à pouvoir être changé facilement, et pour cela une vis de serrage (8) apte à être actionnée de l'extérieur pénètre dans un dégagement (18) du corps intermédiaire (4).
